(19) **Europäisches Patentamt**
**European Patent Office**
**Office européen des brevets**

(11) **EP 1 396 421 B1**

(12) **FASCICULE DE BREVET EUROPEEN**

(45) Date de publication et mention
de la délivrance du brevet:
**09.07.2008 Bulletin 2008/28**

(51) Int Cl.:
***B64C 13/50*** *(2006.01)*

(21) Numéro de dépôt: **03291892.2**

(22) Date de dépôt: **30.07.2003**

(54) **Procédé et système pour déplacer une gouverne d'un aéronef**

Verfahren und System zum Verschieben eines Flugzeugseitenruders

Process and system to move an aircraft rudder

(84) Etats contractants désignés:
**AT BE BG CH CY CZ DE DK EE ES FI FR GB GR HU IE IT LI LU MC NL PT RO SE SI SK TR**

(30) Priorité: **09.09.2002 FR 0211124**

(43) Date de publication de la demande:
**10.03.2004 Bulletin 2004/11**

(73) Titulaire: **AIRBUS France**
**31060 Toulouse (FR)**

(72) Inventeurs:
• **Van de Kreeke, Marc**
**31490 Leguevin (FR)**

• **Cassein, Guillaume**
**Bât. A1, Apt. 26,**
**31300 Toulouse (FR)**

(74) Mandataire: **Hauer, Bernard**
**Cabinet Bonnétat**
**29, Rue de Saint-Pétersbourg**
**75008 Paris (FR)**

(56) Documents cités:
**FR-A- 2 809 373**       **US-A- 5 170 969**
**US-B1- 6 209 825**     **US-B1- 6 338 454**

**Description**

La présente invention concerne un procédé et un système pour déplacer une gouverne d'un aéronef, en particulier d'un avion de transport.

Afin d'améliorer les performances (consommation de carburant, niveau de bruit, etc.) d'un aéronef, sans diminuer la charge utile transportée, les constructeurs sont amenés à diminuer le plus possible la masse de l'aéronef, c'est-à-dire la masse de la structure, d'organes, d'équipements, etc. dudit aéronef. A cet effet, il peut être intéressant de diminuer la masse d'éléments stabilisateurs tels que la dérive, un stabilisateur horizontal ou une voilure par exemple.

On sait qu'un élément stabilisateur d'un aéronef est dimensionné en tenant compte des efforts maximaux auxquels il est susceptible d'être soumis lors des différentes configurations de vol de cet aéronef. Par conséquent, pour limiter la masse d'un tel élément stabilisateur et donc également la masse de l'aéronef, une solution est de réduire les efforts auxquels cet élément stabilisateur est susceptible d'être soumis au cours d'un vol.

A cet effet, on connaît par le document FR-A-2 809 373 qui comporte les caractéristiques du préambule des revendications 1 et 8, un système de commande électrique pour une gouverne de direction d'un aéronef, grâce auquel il est possible de limiter les charges latérales appliquées en manoeuvre sur ladite gouverne de direction et donc de réduire le dimensionnement et la masse de cette dernière, sans pour autant réduire les qualités de vol de l'aéronef ou la sécurité de vol.

Pour ce faire, ledit système de commande comporte :

- un palonnier actionné par le pilote et associé à un transducteur délivrant un ordre électrique de pilotage représentatif de l'action du pilote sur ledit palonnier ;
- un actionneur recevant un ordre de commande dérivé dudit ordre de pilotage et déplaçant ladite gouverne de direction autour de son axe de rotation ; et
- entre ledit palonnier et ledit actionneur, des moyens de filtrage du type passe-bas recevant ledit ordre de pilotage dudit transducteur et engendrant ledit ordre de commande pour ledit actionneur, la constante de temps desdits moyens de filtrage étant d'autant plus élevée que l'amplitude dudit ordre de pilotage correspond à une fraction plus grande de la valeur maximale de débattement de la gouverne de direction.

Ainsi, ce système de commande connu introduit, dans les ordres de pilotage au palonnier, un filtrage non linéaire qui dépend du débattement disponible pour la gouverne de direction, ce filtrage étant d'autant plus important que ladite gouverne de direction s'approche des butées limitant le débattement maximal, ce qui limite les charges appliquées à ladite gouverne et permet donc de réduire le dimensionnement et la masse de cette dernière.

Ce système de commande connu a donc pour but de minimiser les efforts induits par une manoeuvre brusque de la dérive, commandée par le pilote. Pour cela, il procède à un filtrage de l'ordre de braquage de la dérive donné par le pilote. L'amplitude du filtrage est fonction de l'amplitude de cet ordre de braquage. Le réglage dudit filtrage est identique sur tout le domaine de vol de l'avion, de sorte que le filtrage dépend de conditions liées à l'ordre de braquage de la gouverne, mais ne dépend pas des conditions de vol de l'avion.

Or, pour un ordre de braquage donné, les efforts induits sur la dérive peuvent être différents selon les conditions de vol de l'avion. Il en résulte que ledit système de commande connu n'est pas optimal dans certains cas, en ce sens que, dans certaines conditions de vol, il agit moins que ce qu'il pourrait agir effectivement.

La présente invention a pour objet de remédier à ces inconvénients. Elle concerne un procédé pour déplacer une gouverne d'un aéronef de manière à réduire les efforts induits auxquels est soumis un élément stabilisateur dudit aéronef, ladite gouverne étant montée (sur ledit élément stabilisateur) rotative autour d'un axe pour pouvoir prendre n'importe quelle position angulaire de braquage à l'intérieur d'une plage de débattement et étant déplacée conformément à un ordre de braquage qui lui est appliqué, et ledit aéronef comportant une unité de commande susceptible de déterminer un premier ordre de braquage en fonction au moins de l'actionnement d'un organe de commande par un pilote de l'aéronef.

A cet effet, ledit procédé est remarquable, selon l'invention, en ce que l'on réalise, automatiquement et répétitivement, la suite d'opérations successives suivante :

a) on détermine une première valeur dépendant de l'effort maximal auquel peut être soumis ledit élément stabilisateur ;

b) on détermine une seconde valeur tenant compte de l'effort effectif auquel est soumis ledit élément stabilisateur lorsqu'on applique à ladite gouverne ledit premier ordre de braquage déterminé par ladite unité de commande ;

c) on compare entre elles lesdites première et seconde valeurs ; et

d) en fonction de cette comparaison :

- si ladite seconde valeur est inférieure ou égale à ladite première valeur, on applique à ladite gouverne ledit premier ordre de braquage ; et

- si ladite seconde valeur est supérieure à ladite première valeur, on calcule un second ordre de braquage permettant de limiter l'effort auquel est soumis ledit élément stabilisateur audit effort maximal et on applique à ladite gouverne ce second ordre de braquage.

Ainsi, grâce à l'invention, dès que ladite seconde valeur tenant compte de l'effort effectif auquel est soumis l'élément stabilisateur dépasse ladite première valeur dépendant de l'effort maximal, on applique à la gouverne ledit second ordre de braquage (ordre correctif) qui permet de limiter l'effort auquel est soumis ledit élément stabilisateur audit effort maximal.

Par conséquent, quelles que soient les conditions de vol et les manoeuvres de l'aéronef, l'effort auquel est soumis ledit élément stabilisateur (une dérive, un stabilisateur horizontal, une voilure, ...) est toujours limité audit effort maximal, ce qui permet de remédier aux inconvénients précités. On peut ainsi, notamment, réduire le dimensionnement et la masse dudit élément stabilisateur.

En outre, à la différence du système de commande décrit dans le document FR-2 809 373 précité, la présente invention prévoit de détecter les conditions de vol pour lesquelles les efforts sont importants, afin d'agir sur l'ordre de braquage, notamment lorsque lesdits efforts sont les plus élevés.

Dans un premier mode de réalisation, ladite première valeur correspond audit effort maximal qui est prédéterminé et ladite seconde valeur correspond audit effort effectif.

Dans ce cas, avantageusement, on détermine ledit effort effectif Mx à partir de l'expression suivante :

$$Mx = -\frac{1}{2}.\rho.S.V^2.\left(Z1.C1.\beta r + Z2.C2.\delta rmes\right)$$

dans laquelle :

- $\rho$ est la densité de l'air ;
- S est la surface de l'élément stabilisateur ;
- V est la vitesse air ;
- Z1 est le bras de levier entre le centre d'application de l'effort aérodynamique dû au dérapage et l'axe de calcul du moment ;
- C1 est un coefficient de force latérale, relatif à l'élément stabilisateur pour l'effet de dérapage ;
- $\beta r$ est le dérapage ;
- Z2 est le bras de levier entre le centre d'application de l'effort aérodynamique dû au braquage de la gouverne et l'axe de calcul du moment ;
- C2 est un coefficient de force latérale, relatif à l'élément stabilisateur, en fonction du braquage de la gouverne ; et
- $\delta rmes$ est un angle de braquage mesuré.

Dans un second mode de réalisation préféré, ladite première valeur correspond audit second ordre de braquage et ladite seconde valeur correspond audit premier ordre de braquage. Ce mode de réalisation préféré présente l'avantage d'éviter des oscillations à hautes fréquences qui peuvent survenir lorsque l'on compare directement des efforts (au lieu de comparer des ordres de braquage).

De façon avantageuse, on détermine ledit second ordre de braquage $\delta rmax$, utilisé à l'étape d), à partir de l'expression suivante :

$$\delta r\,max = \left[\left(Mx\,max / \left(-\frac{1}{2}.\rho.S.V^2\right)\right) - Z1.C1.\beta r\right].\left[1/\left(Z2.C2\right)\right]$$

dans laquelle :

- Mxmax est ledit effort maximal ; et
- $\rho$, S, V, Z1, C1, $\beta r$, Z2 et C2 sont les paramètres précités.

En outre, avantageusement, ledit effort maximal est inférieur d'un pourcentage prédéterminé d'un effort limite relatif audit élément stabilisateur.

Par ailleurs, dans un mode de réalisation particulier, on inhibe l'application dudit second ordre de braquage, lors d'au moins une configuration de vol particulière de l'aéronef, pour laquelle la correction précitée et conforme à l'invention pourrait entraîner un blocage de la gouverne ou un braquage de cette dernière de sens opposé à celui commandé par le pilote. Ceci pourrait se produire, en particulier, lors de pannes de capteurs employés pour mesurer les différents paramètres utilisés par la loi de protection en effort ou lorsque la valeur du seuil d'effort Mxmax est trop faible, c'est-à-dire inférieure à la valeur des efforts qui seraient induits du seul fait du dérapage de l'avion dans les conditions de vol considérées.

La présente invention concerne également un système de commande électrique pour déplacer une gouverne d'un aéronef, du type comportant :

- une unité de commande qui comprend au moins un organe de commande susceptible d'être actionné par un pilote et au moins un moyen de protection en effort, et qui délivre un premier ordre de braquage représentatif, d'une part, de l'action exercée par le pilote sur ledit organe de commande et, d'autre part, de la contribution apportée par ledit moyen de protection en effort ; et
- un actionneur qui déplace ladite gouverne autour de son axe, en fonction d'un ordre de braquage reçu.

Selon l'invention, ledit système de commande comporte, de plus :

- un dispositif de correction qui comprend :

    . un premier moyen pour déterminer un second ordre de braquage permettant de limiter l'effort, auquel est soumis ledit élément stabilisateur, à un effort maximal ; et
    . un deuxième moyen, de préférence un voteur, pour choisir l'un desdits premier et second ordres de braquage, qui est transmis audit actionneur pour déplacer ladite gouverne ; et

- éventuellement, un troisième moyen pour inhiber ledit dispositif de correction.

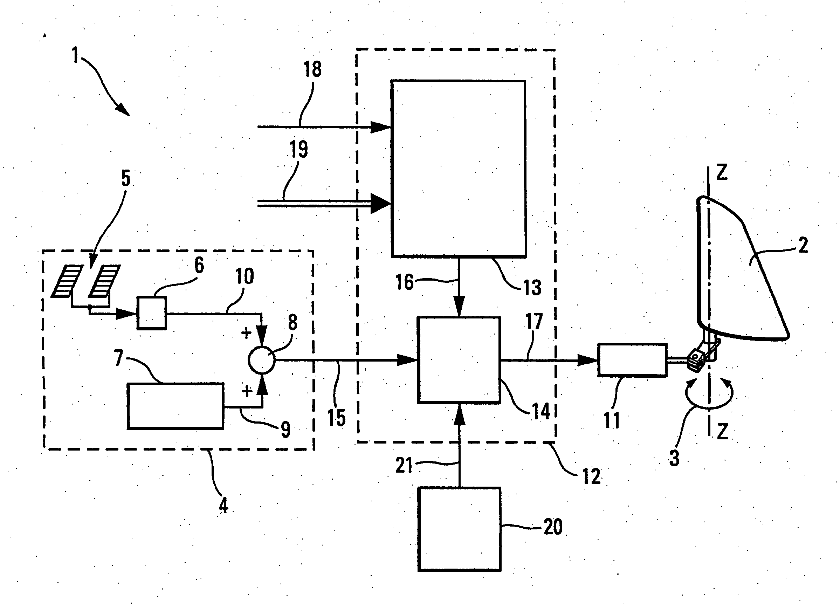

L'unique figure du dessin annexé fera bien comprendre comment l'invention peut être réalisée. Cette figure montre le schéma synoptique d'un système de commande électrique conforme à l'invention.

Le système de commande électrique 1, conforme à la présente invention et représenté sur la figure, est destiné à l'actionnement d'une gouverne 2 d'aéronef, par exemple une gouverne de direction, montée rotative dans les deux sens autour d'un axe Z-Z, de la facon symbolisée par une double flèche 3. Ladite gouverne 2 peut prendre n'importe quelle position angulaire autour dudit axe Z-Z à l'intérieur d'une plage de débattement, s'étendant de part et d'autre de la position aérodynamiquement neutre de ladite gouverne 2.

Ledit système de commande électrique 1 d'un aéronef, par exemple d'un avion de transport, est du type connu, comportant :

- une unité de commande 4 qui comprend :

    . un organe de commande 5, par exemple un palonnier ou un mini-manche, qui est susceptible d'être actionné par un pilote de l'aéronef, et qui est associé à un transducteur 6 délivrant un ordre électrique de commande (relatif au braquage de la gouverne 2) représentatif de l'actionnement dudit organe de commande 5 ;
    . un moyen 7 de protection en effort, de type usuel qui délivre un ordre électrique de protection ou ordre électrique filtré (relatif au braquage de la gouverne 2), comme décrit par exemple dans le document FR-2 809 373 précité de la demanderesse ; et
    . un sommateur 8 qui est relié par l'intermédiaire de liaisons 9 et 10 respectivement audit transducteur 6 et audit moyen 7 et qui fait la somme desdits ordres de commande et de protection, pour former un premier ordre (électrique) de braquage de la gouverne 2 ; et

- un actionneur 11 usuel, qui est susceptible de déplacer ladite gouverne 2 autour de l'axe Z-Z, en fonction d'un ordre de braquage reçu.

Selon l'invention, pour limiter les efforts auxquels est soumis un élément stabilisateur (par exemple une dérive, un stabilisateur horizontal ou une voilure) de l'aéronef en fonction du braquage de la gouverne 2, ladite gouverne 2 étant montée rotative sur ledit élément stabilisateur non représenté, ledit système de commande 1 comporte, de plus, un dispositif de correction 12 qui est agencé entre l'unité de commande 4 et l'actionneur 11 et qui comporte :

- un moyen de calcul 13 pour déterminer un second ordre (électrique) de braquage permettant de limiter l'effort auquel est soumis ledit élément stabilisateur, à un effort maximal ; et
- un moyen 14, par exemple un voteur, qui est relié par des liaisons 15 et 16 respectivement au sommateur 8 et au moyen de calcul 13, et qui a pour objet, comme précisé ci-dessous, de choisir parmi ledit premier ordre de braquage reçu du sommateur 8 et ledit second ordre de braquage reçu du moyen de calcul 13, celui qu'il transmet par une liaison 17 à l'actionneur 11 pour qu'il déplace, de façon correspondante, ladite gouverne 2.

Plus précisément, selon l'invention, ledit moyen 14 :

- compare entre elles :

  . une première valeur dépendant de l'effort maximal, auquel peut être soumis ledit élément stabilisateur ; et
  . une seconde valeur tenant compte de l'effort effectif, auquel est soumis ledit élément stabilisateur lorsqu'on applique audit actionneur 11 ledit premier ordre de braquage déterminé par ladite unité de commande 4 ; et

- transmet audit actionneur 11, en fonction de cette comparaison :

  . si ladite seconde valeur est inférieure ou égale à ladite première valeur, ledit premier ordre de braquage (reçu de l'unité de commande 4) ; et
  . si ladite seconde valeur est supérieure à ladite première valeur, ledit second ordre de braquage (recu du moyen de calcul 13) permettant de limiter l'effort, auquel est soumis ledit élément stabilisateur, audit effort maximal.

Dans un premier mode de réalisation, ladite première valeur correspond audit effort maximal Mxmax qui est, de plus, prédéterminé, et ladite seconde valeur correspond à l'effort effectif Mx.
Dans ce cas, le dispositif de correction 12 détermine ledit effort effectif Mx à partir de l'expression suivante :

$$Mx = -\frac{1}{2}.\rho.S.V^2.(Z1.C1.\beta r + Z2.C2.\delta rmes)$$

dans laquelle :

- $\rho$ est la densité de l'air ;
- S est la surface de l'élément stabilisateur ;
- V est la vitesse air ;
- Z1 est le bras de levier entre le centre d'application de l'effort dynamique dû au dérapage et l'axe de calcul du moment ;
- C1 est un coefficient de force latérale, relatif à l'élément stabilisateur pour l'effet de dérapage ;
- $\beta r$ est le dérapage ;
- Z2 est le bras de levier entre le centre d'application de l'effort dynamique dû au braquage de la gouverne 2 et l'axe de calcul du moment ;
- C2 est un coefficient de force latérale, relatif à l'élément stabilisateur, en fonction du braquage de la gouverne 2 ; et
- $\delta rmes$ est un angle de braquage mesuré.

Dans un second mode de réalisation préféré, qui permet d'éviter des oscillations à hautes fréquences susceptibles de survenir avec ledit premier mode de réalisation, ladite première valeur correspond audit second ordre de braquage et ladite seconde valeur correspond audit premier ordre de braquage.
Dans ce second mode de réalisation, ledit moyen 14 compare donc, entre eux, directement, le premier ordre de braquage reçu de l'unité de commande 4 et le second ordre de braquage reçu du moyen de calcul 13.
Selon l'invention, aussi bien pour ledit premier mode de réalisation que pour ledit second mode de réalisation, ledit moyen de calcul 13 détermine ledit second ordre de braquage $\delta rmax$, à partir de l'expression suivante :

$$\delta r max = \left[\left(Mx max / \left(-\frac{1}{2}.\rho.S.V^2\right)\right) - Z1.C1.\beta r\right].[1/(Z2.C2)]$$

dans laquelle :

- Mxmax est ledit effort maximal ;

- $\rho$ est la densité de l'air ;
- S est la surface de l'élément stabilisateur ;
- V est la vitesse air ;
- Z1 est le bras de levier entre le centre d'application de l'effort aérodynamique dû au dérapage et l'axe de calcul du moment ;
- C1 est le coefficient de force latérale, relatif à l'élément stabilisateur pour l'effet de dérapage ;
- $\beta r$ est le dérapage ;
- Z2 est le bras de levier entre le centre d'application de l'effort aérodynamique dû au braquage de la gouverne 2 et l'axe de calcul du moment ; et
- C2 est le coefficient de force latérale, relatif à l'élément stabilisateur, en fonction du braquage de la gouverne 2.

Pour ce faire, ledit moyen de calcul 13 reçoit :

- la valeur Mxmax de l'effort maximal, par une liaison 18 ; et
- d'autres valeurs (p, V, ...) de capteurs montés sur l'aéronef et destinés à mesurer ces valeurs, comme illustré par une liaison globale 19 sur la figure.

Dans le cadre de la présente invention, on choisit ledit effort maximal Mxmax égal à une valeur qui est inférieure d'un pourcentage prédéterminé, par exemple 10% ou 20%, d'un effort limite concernant ledit élément stabilisateur. Par exemple, on peut choisir une valeur qui est 10% au-dessous du niveau de l'enveloppe des charges extrêmes. Cette valeur peut, de plus, être ajustée lors de vols d'essai.

Par ailleurs, ledit système de commande 1 comporte également un moyen d'inhibition 20 qui est relié par une liaison 21 au moyen 14 pour inhiber, lors de l'application du second ordre de braquage, ledit dispositif de protection 12, c'est-à-dire pour supprimer alors l'application dudit second ordre de braquage et imposer l'application du premier ordre de braquage, mais ceci uniquement dans certaines conditions de vol très particulières et peu fréquentes, précisées ci-après.

En effet, dans certaines (rares) conditions de vol, la correction précitée et mise en oeuvre par le dispositif de correction 12, pourrait entraîner un blocage de la gouverne 2 ou un braquage de cette dernière de sens opposé à celui commandé par le pilote. Ceci pourrait se produire, en particulier, lors de pannes de capteurs employés pour mesurer les différents paramètres utilisés par la loi de protection en effort ou lorsque la valeur du seuil d'effort Mxmax est trop faible, c'est-à-dire inférieure à la valeur des efforts qui seraient induits du seul fait du dérapage de l'avion dans les conditions de vol considérées.

Les informations qui permettent de détecter de tels phénomènes indésirables sont, notamment :

- le départ de la gouverne 2 en sens inverse à l'ordre du pilote ;
- un braquage constant pendant un laps de temps trop long, alors que la consigne pilote est dans une phase dynamique ;
- le braquage de la gouverne 2 tendant à l'éloigner de la position de consigne pilote, alors que cette consigne n'est pas en régime dynamique avec une pente trop importante ou pendant un laps de temps trop long.

Le moyen d'inhibition 20 peut détecter ces phénomènes, en utilisant comme informations par exemple les entrées de consigne pilote (liaison 10) et de braquage de la gouverne 2 (liaison 17).

On notera que le système 1 conforme à l'invention (et notamment le dispositif de correction 12) :

- agit de manière efficace sur la réduction des pics d'effort dus aux déplacements rapides de la gouverne 2. On notera à titre d'exemple non limitatif que l'on peut obtenir, en pratique, en fonction notamment de l'avion et du domaine de vol envisagé, une réduction des pics d'effort de 20% pour l'application à une gouverne de direction et une dérive (élément stabilisateur). Plus précisément, sur un avion de transport civil gros porteur, on peut espérer une réduction des charges limites en flexion de la dérive de 20% qui, conjuguée avec la réduction induite des efforts s'appliquant sur le fuselage arrière, peut permettre une économie d'environ 250 kg, soit un gain de deux passagers supplémentaires embarqués. Cette réduction agit de manière à adoucir les phases transitoires. Dans ce cas, il n'y a quasiment aucune répercussion sur la mécanique du vol. On notera, en outre, qu'au lieu d'utiliser l'invention pour diminuer le poids de la dérive, il est aussi possible de l'utiliser pour se prémunir contre des efforts plus importants que ceux choisis pour les calculs de dimensionnement de l'avion ;
- est peu coûteux et simple à réaliser. En particulier, il ne nécessite pas de capteurs supplémentaires autres que ceux existants en général sur les aéronefs ; et
- peut être appliqué à tout type d'élément stabilisateur de l'aéronef.

**Revendications**

1. Procédé pour déplacer une gouverne (2) d'un aéronef de manière à réduire les efforts induits auxquels est soumis un élément stabilisateur dudit aéronef, ladite gouverne (2) étant montée rotative autour d'un axe (Z-Z) pour pouvoir prendre n'importe quelle position angulaire de braquage à l'intérieur d'une plage de débattement et étant déplacée conformément à un ordre de braquage qui lui est appliqué, et ledit aéronef comportant une unité de commande (4) susceptible de déterminer un premier ordre de braquage en fonction au moins de l'actionnement d'un organe de commande (5) par un pilote de l'aéronef,
   **caractérisé en ce que** l'on réalise, automatiquement et répétitivement, la suite d'opérations successives suivante :

   a) on détermine une première valeur dépendant de l'effort maximal auquel peut être soumis ledit élément stabilisateur ;
   b) on détermine une seconde valeur tenant compte de l'effort effectif auquel est soumis ledit élément stabilisateur, lorsqu'on applique à ladite gouverne (2) ledit premier ordre de braquage déterminé par ladite unité de commande (4) ;
   c) on compare entre elles lesdites première et seconde valeurs ; et
   d) en fonction de cette comparaison :

   - si ladite seconde valeur est inférieure ou égale à ladite première valeur, on applique à ladite gouverne (2) ledit premier ordre de braquage ; et
   - si ladite seconde valeur est supérieure à ladite première valeur, on calcule un second ordre de braquage permettant de limiter l'effort auquel est soumis ledit élément stabilisateur audit effort maximal, et on applique à ladite gouverne (2) ce second ordre de braquage.

2. Procédé selon la revendication 1, **caractérisé en ce que** ladite première valeur correspond audit effort maximal qui est prédéterminé, et ladite seconde valeur correspond audit effort effectif.

3. Procédé selon la revendication 2, **caractérisé en ce que** l'on détermine ledit effort effectif Mx à partir de l'expression suivante :

$$Mx = -\frac{1}{2}.\rho.S.V^2.(Z1.C1.\beta r + Z2.C2.\delta rmes)$$

dans laquelle :

   - $\rho$ est la densité de l'air ;
   - S est la surface de l'élément stabilisateur ;
   - V est la vitesse air ;
   - Z1 est le bras de levier entre le centre d'application de l'effort aérodynamique dû au dérapage et l'axe de calcul du moment ;
   - C1 est -un coefficient de force latérale, relatif à l'élément stabilisateur pour l'effet de dérapage ;
   - $\beta r$ est le dérapage ;
   - Z2 est le bras de levier entre le centre d'application de l'effort aérodynamique dû au braquage de la gouverne (2) et l'axe de calcul du moment ;
   - C2 est un coefficient de force latérale, relatif à l'élément stabilisateur, en fonction du braquage de la gouverne (2) ; et
   - $\delta rmes$ est un angle de braquage mesuré.

4. Procédé selon la revendication 1,
   **caractérisé en ce que** ladite première valeur correspond audit second ordre de braquage, et ladite seconde valeur correspond audit premier ordre de braquage.

5. Procédé selon l'une quelconque des revendications précédentes, **caractérisé en ce que** l'on détermine ledit second ordre de braquage $\delta rmax$, à partir de l'expression suivante :

$$\delta r\, max = \left[\left(Mx\, max \bigg/ \left(-\frac{1}{2}.\rho.S.V^2\right)\right) - Z1.C1.\beta r\right].\left[1/(Z2.C2)\right]$$

dans laquelle :

- Mxmax est ledit effort maximal ;
- $\rho$ est la densité de l'air ;
- S est la surface de l'élément stabilisateur ;
- V est la vitesse air ;
- Z1 est le bras de levier entre le centre d'application de l'effort aérodynamique dû au dérapage et l'axe de calcul du moment ;
- C1 est un coefficient de force latérale, relatif à l'élément stabilisateur pour l'effet de dérapage ;
- $\beta r$ est le dérapage ;
- Z2 est le bras de levier entre le centre d'application de l'effort aérodynamique dû au braquage de la gouverne (2) et l'axe de calcul du moment; et
- C2 est un coefficient de force latérale, relatif à l'élément stabilisateur, en fonction du braquage de la gouverne (2).

6. Procédé selon l'une quelconque des revendications précédentes, **caractérisé en ce que** ledit effort maximal est inférieur d'un pourcentage prédéterminé d'un effort limite relatif audit élément stabilisateur.

7. Procédé selon l'une quelconque des revendications précédentes, **caractérisé en ce que** l'on inhibe l'application dudit second ordre de braquage, lors d'au moins une configuration de vol particulière de l'aéronef.

8. Système de commande électrique pour déplacer une gouverne (2) d'un aéronef, ladite gouverne (2) étant montée rotative autour d'un axe (Z-Z) pour pouvoir prendre n'importe quelle position angulaire de braquage à l'intérieur d'une plage de débattement, et ledit système (1) comportant :

   - une unité de commande (4) qui comprend au moins un organe de commande (5) susceptible d'être actionné par un pilote et au moins un moyen de protection en effort (7), et qui délivre un premier ordre de braquage représentatif, d'une part, de l'action exercée par le pilote sur ledit organe de commande (5) et, d'autre part, de la contribution apportée par ledit moyen de protection en effort (7) ; et
   - un actionneur (11) qui déplace ladite gouverne (2) autour dudit axe (Z-Z), en fonction d'un ordre de braquage reçu,

   **caractérisé en ce qu'**il comporte, de plus, un dispositif de correction (12) qui comprend :

   - un premier moyen (13) pour déterminer un second ordre de braquage permettant de limiter l'effort, auquel est soumis ledit élément stabilisateur, à un effort maximal ; et
   - un deuxième moyen (14) pour choisir l'un desdits premier et second ordres de braquage, qui est transmis audit actionneur (11) pour déplacer ladite gouverne (2), ledit deuxième moyen (14) comparant entre elles :

     · une première valeur dépendant de l'effort maximal, auquel peut être soumis ledit élément stabilisateur ; et
     · une seconde valeur tenant compte de l'effort effectif, auquel est soumis ledit élément stabilisateur lorsqu'on applique audit actionneur (11) ledit premier ordre de braquage déterminé par ladite unité de commande (4),

   et ledit deuxième moyen (14) transmettant audit actionneur (11), en fonction de cette comparaison :

     . si ladite seconde valeur est inférieure ou égale à ladite première valeur, ledit premier ordre de braquage ; et
     · si ladite seconde valeur est supérieure à ladite première valeur, ledit second ordre de braquage permettant de limiter l'effort, auquel est soumis ledit élément stabilisateur, audit effort maximal.

9. Système selon la revendication 8,
   **caractérisé en ce que** ledit deuxième moyen (14) est un voteur.

10. Système selon l'une des revendications 8 et 9,

**caractérisé en ce qu'**il comporte, de plus, un troisième moyen (20) pour inhiber ledit dispositif de correction (12).

**Claims**

1. A process for moving a control surface (2) of an aircraft in such a way as to reduce the induced loads to which a stabilizer element of said aircraft is subjected, said control surface (2) being mounted rotatably about an axis (Z-Z) so as to be able to take any angular position of deflection within a range of travel and being moved in accordance with a deflection order applied thereto, and said aircraft comprising a control unit (4) able to determine a first deflection order as a function of at least the actuation of a control member (5) by a pilot of the aircraft,
   **characterized in that** the following series of successive operations is carried out automatically and repetitively:

   a) a first value is determined, dependent on the maximum load to which said stabilizer element may be subjected;
   b) a second value is determined, taking into account the actual load to which said stabilizer element is subjected, when said first deflection order determined by said control unit (4) is applied to said control surface (2);
   c) said first and second values are intercompared; and
   d) as a function of this comparison:

   - if said second value is less than or equal to said first value, said first deflection order is applied to said control surface (2); and
   - if said second value is greater than said first value, a second deflection order is calculated, making it possible to limit the load to which said stabilizer element is subjected to said maximum load, and this second deflection order is applied to said control surface (2).

2. The process as claimed in claim 1,
   **characterized in that** said first value corresponds to said maximum load which is predetermined, and said second value corresponds to said actual load.

3. The process as claimed in claim 2,
   **characterized in that** said actual load Mx is determined from the following expression:

$$\mathrm{Mx} = -\frac{1}{2}.\rho.\mathrm{S.V}^2.(\mathrm{Z1.C1.\beta r} + \mathrm{Z2.C2.\delta rmes})$$

   in which:

   - $\rho$ is the density of the air;
   - S is the surface area of the stabilizer element;
   - V is the air speed;
   - Z1 is the lever arm between the center of application of the aerodynamic load due to sideslip and the axis of calculation of the moment;
   - C1 is a lateral force coefficient, relating to the stabilizer element for the sideslip effect;
   - $\beta r$ is the sideslip;
   - Z2 is the lever arm between the center of application of the aerodynamic load due to the deflection of the control surface (2) and the axis of calculation of the moment;
   - C2 is a lateral force coefficient, relating to the stabilizer element, as a function of the deflection of the control surface (2); and
   - $\delta rmes$ is a measured deflection angle.

4. The process as claimed in claim 1,
   **characterized in that** said first value corresponds to said second deflection order, and said second value corresponds to said first deflection order.

5. The process as claimed in any one of the preceding claims,
   **characterized in that** said second deflection order $\delta rmax$ is determined from the following expression:

$$\delta r \max = \left[\left(Mx \max \Big/\left(-\frac{1}{2}.\rho.S.V^2\right)\right) - Z1.C1.\beta r\right].[1\ /(Z2.C2)]$$

in which:

- Mxmax is said maximum load;
- $\rho$ is the density of the air;
- S is the surface area of the stabilizer element;
- V is the air speed;
- Z1 is the lever arm between the center of application of the aerodynamic load due to sideslip and the axis of calculation of the moment;
- C1 is a lateral force coefficient, relating to the stabilizer element for the sideslip effect;
- $\beta r$ is the sideslip;
- Z2 is the lever arm between the center of application of the aerodynamic load due to the deflection of the control surface (2) and the axis of calculation of the moment; and
- C2 is a lateral force coefficient, relating to the stabilizer element, as a function of the deflection of the control surface (2).

6. The process as claimed in any one of the preceding claims, **characterized in that** said maximum load is less than a predetermined percentage of a limit load relating to said stabilizer element.

7. The process as claimed in any one of the preceding claims, **characterized in that** the application of said second deflection order is disabled during at least one particular flight configuration of the aircraft.

8. An electric control system for moving a control surface (2) of an aircraft, said control surface (2) being mounted rotatably about an axis (Z-Z) so as to be able to take any angular position of deflection within a range of travel, and said system (1) comprising:

- a control unit (4) which comprises at least one control member (5) able to be actuated by a pilot and at least one means of load-wise protection (7), and which delivers a first deflection order representative, on the one hand, of the action exerted by the pilot on said control member (5), and, on the other hand, of the contribution made by said means of load-wise protection (7); and
- an actuator (11) which moves said control surface (2) about said axis (Z-Z), as a function of a deflection order received,

**characterized in that** it moreover includes a correction device (12) which comprises:

- a first means (13) for determining a second deflection order making it possible to limit the load, to which said stabilizer element is subjected, to a maximum load; and
- a second means (14) for choosing one of said first and second deflection orders, which is transmitted to said actuator (11) so as to move said control surface (2), said second means (14) intercomparing:

  • a first value dependent on the maximum load, to which said stabilizer element may be subjected; and
  • a second value taking account of the actual load, to which said stabilizer element is subjected when said first deflection order determined by said control unit (4) is applied to said actuator (11),
  and said second means (14) transmitting to said actuator (11), as a function of this comparison:
  • if said second value is less than or equal to said first value, said first deflection order; and
  • if said second value is greater than said first value, said second deflection order making it possible to limit the load, to which said stabilizer element is subjected, to said maximum load.

9. The system as claimed in claim 8, **characterized in that** said second means (14) is a voter.

10. The system as claimed in any of claims 8 and 9,

**characterized in that** it moreover comprises a third means (20) for disabling said correction device (12).

**Patentansprüche**

1. Verfahren um eine Steuerfläche (2) eines Flugzeugs derart zu verstellen, dass die induzierten Kräfte, denen ein Stabilisierungselement des Flugzeugs ausgesetzt ist, verringert werden, wobei die Steuerfläche (2) um eine Achse (Z-Z) drehbar angeordnet ist, um jede beliebige Ausschlagwinkelstellung innerhalb eines Ausschlagbereichs einnehmen zu können und nach Maßgabe eines auf sie angewandten Ausschlagbefehls verstellt wird und das Flugzeug eine Steuereinheit (4) umfasst, die dazu ausgebildet ist, einen ersten Ausschlagbefehl in Abhängigkeit von zumindest der Betätigung eines Steuerorgans (5) durch einen Piloten des Flugzeugs zu erfassen,
**dadurch gekennzeichnet, dass** automatisch und wiederholt die nachfolgend genannte Folge von Arbeitsschritten durchgeführt wird:

   a) ein erster Wert, der von der Höchstbelastung, welcher das Stabilisierungselement ausgesetzt werden kann, abhängt, wird bestimmt;
   b) ein zweiter Wert wird unter Berücksichtigung der tatsächlichen Belastung, welcher das Stabilisierungselement bei Anwendung des ersten, von der Steuereinheit (4) bestimmten Ausschlagbefehls auf die Steuerfläche (2) ausgesetzt ist, bestimmt;
   c) der erste und der zweite Wert werden miteinander verglichen und
   d) in Abhängigkeit dieses Vergleichs:

      - wird, wenn der zweite Wert geringer oder gleich dem ersten Wert ist, der erste Ausschlagbefehl auf die Steuerfläche (2) angewandt und
      - wird, wenn der zweite Wert höher als der erste Wert ist, ein zweiter Ausschlagbefehl berechnet, der es ermöglicht, die Belastung, welcher das Stabilisierungselement ausgesetzt ist, auf die Höchstbelastung zu begrenzen und dieser zweite Ausschlagbefehl auf die Steuerfläche (2) angewandt.

2. Verfahren nach Anspruch 1,
**dadurch gekennzeichnet, dass** der erste Wert der Höchstbelastung, die vorgegeben ist, entspricht und der zweite Wert der tatsächlichen Belastung.

3. Verfahren nach Anspruch 2,
**dadurch gekennzeichnet, dass** die tatsächliche Belastung Mx mithilfe des folgenden Ausdrucks bestimmt wird:

$$Mx = -\frac{1}{2}.\rho.S.V^2.(Z1.C1.\beta r + Z2.C2.\delta rmes)$$

in dem:

   - $\rho$ die Luftdichte ist,
   - S die Oberfläche des Stabilisierungselements ist,
   - V die Fluggeschwindigkeit ist,
   - Z1 der Hebelarm zwischen dem Zentrum der Beaufschlagung der aerodynamischen Belastung aufgrund des Schiebeflugs und der Berechnungsachse des Moments ist,
   - C1 ein auf das Stabilisierungselement bezogener Seitenkraftbeiwert für die Wirkung des Schiebeflugs ist,
   - $\beta r$ der Schiebeflug ist,
   - Z2 der Hebelarm zwischen dem Zentrum der Beaufschlagung der aerodynamischen Belastung aufgrund des Ausschlags der Steuerfläche (2) und der Berechnungsachse des Moments ist,
   - C2 ein auf das Stabilisierungselement bezogener Seitenkraftbeiwert in Abhängigkeit von dem Ausschlag der Steuerfläche (2) ist,
   - $\delta rmes$ ein gemessener Ausschlagwinkel ist.

4. Verfahren nach Anspruch 1,
**dadurch gekennzeichnet, dass** der erste Wert dem zweiten Ausschlagbefehl entspricht und der zweite Wert dem ersten Ausschlagbefehl entspricht.

5. Verfahren nach einem der vorhergehenden Ansprüche,
**dadurch gekennzeichnet, dass** der zweite Ausschlagbefehl örmax mithilfe des folgenden Ausdrucks bestimmt wird:

$$\delta r\,max = \left[\left(Mx\,max / \left(-\frac{1}{2}.\rho.S.V^2\right)\right) - Z1.C1.\beta r\right].\left[1/(Z2.C2)\right]$$

in dem:

- Mxmax die Höchstbelastung ist,
- $\rho$ die Luftdichte ist,
- S die Oberfläche des Stabilisierungselements ist,
- V die Fluggeschwindigkeit ist,
- Z1 der Hebelarm zwischen dem Zentrum der Beaufschlagung der aerodynamischen Belastung aufgrund des Schiebeflugs und der Berechnungsachse des Moments ist,
- C1 ein auf das Stabilisierungselement bezogener Seitenkraftbeiwert für die Wirkung des Schiebeflugs ist,
- $\beta r$ der Schiebeflug ist,
- Z2 der Hebelarm zwischen dem Zentrum der Beaufschlagung der aerodynamischen Belastung aufgrund des Ausschlags der Steuerfläche (2) und der Berechnungsachse des Moments ist und
- C2 ein auf das Stabilisierungselement bezogener Seitenkraftbeiwert in Abhängigkeit von dem Ausschlag der Steuerfläche (2) ist.

6. Verfahren nach einem der vorhergehenden Ansprüche,
**dadurch gekennzeichnet, dass** die Höchstbelastung geringer als ein vorgegebener Prozentsatz einer auf das Stabilisierungselement bezogenen Grenzbelastung ist.

7. Verfahren nach einem der vorhergehenden Ansprüche,
**dadurch gekennzeichnet, dass** die Anwendung des zweiten Ausschlagbefehls bei zumindest einer speziellen Flugkonfiguration des Flugzeugs gehemmt wird.

8. Elektrisches Ansteuersystem zum Auslenken einer Steuerfläche (2) eines Flugzeugs, wobei die Steuerfläche (2) um eine Achse (Z-Z) drehbar angeordnet ist, um jede beliebige Ausschlagwinkelstellung innerhalb eines Ausschlagbereichs einnehmen zu können und das System (1) umfasst:

- eine Steuereinheit (4), die mindestens ein Steuerorgan (5) umfasst, das von einem Piloten betätigbar ist und mindestens ein Mittel zum Belastungsschutz (7), das einen ersten Ausschlagbefehl abgibt, der einerseits für die von dem Piloten auf das Steuerorgan (5) ausgeübte Aktion und andererseits für den Beitrag durch das Mittel zum Belastungsschutz (7) repräsentativ ist und
- einen Stellantrieb (11), der die Steuerfläche (2) in Abhängigkeit eines empfangenen Ausschlagbefehls um die Achse (Z-Z) herum verstellt,

**dadurch gekennzeichnet, dass** es außerdem eine Korrektureinrichtung (12) umfasst mit:

- einem ersten Mittel (13) zum Bestimmen eines zweiten Ausschlagbefehls, der es ermöglicht, die Belastung, welcher das Stabilisierungselement ausgesetzt ist, auf eine Höchstbelastung zu begrenzen und
- einem zweiten Mittel (14) zur Auswahl des ersten oder zweiten Ausschlagbefehls, der zum Verstellen der Steuerfläche (2) an den Stellantrieb (11) übertragen wird, wobei das zweite Mittel (14) miteinander vergleicht:

  • einen ersten Wert, der von der Höchstbelastung, welcher das Stabilisierungselement ausgesetzt werden kann, abhängt und
  • einen zweiten Wert, der die tatsächliche Belastung berücksichtigt, welcher das Stabilisierungselement bei Anwendung des ersten, von der Steuereinheit (4) bestimmten Ausschlagbefehls auf den Stellantrieb (11) ausgesetzt ist;

und wobei das zweite Mittel (14) in Abhängigkeit von diesem Vergleich an den Stellantrieb (11):

• den ersten Ausschlagbefehl überträgt, wenn der zweite Wert geringer oder gleich dem ersten Wert ist und
• den zweiten Ausschlagbefehl überträgt, der es ermöglicht, die Belastung, welcher das Stabilisierungselement ausgesetzt ist, auf die Höchstbelastung zu begrenzen, wenn der zweite Wert höher als der erste Wert ist.

9. System nach Anspruch 8,
   **dadurch gekennzeichnet, dass** das zweite Mittel (14) ein Voter ist.

10. System nach Anspruch 8 oder 9,
    **dadurch gekennzeichnet, dass** es außerdem ein drittes Mittel (20) zur Hemmung der Korrektureinrichtung (12) umfasst.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2809373 A

- FR 2809373